# EUROPÄISCHE PATENTSCHRIFT

(11) **EP 1 510 639 B1**
(45) Veröffentlichungstag und Bekanntmachung des Hinweises auf die Patenterteilung: **28.04.2010**
(21) Anmeldenummer: 04019462.3
(22) Anmeldetag: 17.08.2004
(51) Int. Cl.: E05C 19/16, E05B 17/22, F16P 3/08

(54) **Zugangsschutzeinrichtung für einen Raumbereich**
Access control device for a room space
Dispositif de contrôle d'accès pour un local

(30) Priorität: 27.08.2003 DE 10339363
(43) Veröffentlichungstag der Anmeldung: 02.03.2005
(73) Patentinhaber: K.A. Schmersal Holding KG, 42279 Wuppertal (DE)
(72) Erfinder: Klees, Christoph, 50672 Köln (DE)
(74) Vertreter: Sparing Röhl Henseler Patentanwälte European Patent Attorneys

(56) Entgegenhaltungen:
- EP-A- 0 908 904
- DE-A1- 19 910 497
- DE-U1- 20 306 708
- US-B1- 6 271 751

## Beschreibung

Die Erfindung betrifft eine Zugangsschutzeinrichtung für einen Raumbereich nach dem Oberbegriff des Anspruchs 1.

Eine derartige. Zugangsschutzeinrichtung mit einer Zuhaltung, die einen Magnetkreis umfaßt, ist beispielsweise aus DE 203 06 708 U1 bekannt. Hierbei ist ein Magnetfeldsensor zum Erfassen des Magnetfeldes außerhalb des Magnetkreises benachbart zu einer Kontaktfläche zwischen dem Magneten und seinem Joch vorgesehen. Die Zuhaltekraft des Elektromagneten wird hierbei durch den durch den Elektromagneten fließenden Strom bestimmt, der entsprechend geregelt wird. Das Vorsehen eines separaten Magnetfeldsensors zum Überwachen des Zustandes der Zuhaltung ist jedoch aufwendig.

Aufgabe der Erfindung ist es, eine Zugangsschutzeinrichtung nach dem Oberbegriff des Anspruchs 1 bzw. eine Zuhaltung nach dem Oberbegriff des Anspruchs 5 zu schaffen, die ohne separaten Sensor auskommt.

Diese Aufgabe wird entsprechend der Merkmalskombination des Anspruchs 1 bzw. des Anspruchs 5 gelöst.

Hierbei ist vorgesehen, daß für die Stromregelung ein erster und ein zweiter Sollwert vorgegeben sind und periodisch ein Regelsprung vom ersten auf den zweiten Sollwert vorgenommen wird, wobei die Zeit vom Beginn des Regelsprungs bis zum Erreichen des zweiten Sollwerts gemessen und ausgewerkt ist, um zu bestimmen, ob der Magnetkreis und damit die Zuhaltung eine vorbestimmte Zuhaltekraft unterschreitet. Auf diese Weise ist es möglich, die Änderung der Induktivität der Spule des Elektromagneten zu nutzen um festzustellen, ob die Zuhaltung die vorgesehene Zuhaltekraft aufbringt, d.h. ob die Zuhaltung geschlossen ist, oder ob die vorgesehene Zuhaltekraft nicht aufgebracht wird, d.h. die Zuhaltung geöffnet ist, da die Zeit, die vom Beginn des Regelsprungs bis zum Erreichen des zweiten Sollwerts benötigt wird, davon abhängt, ob der Magnetkreis durch das Joch geschlossen ist oder nicht. Je weiter das Joch vom Elektromagneten entfernt ist, desto größer wird dieser Zeitraum.

Weitere Ausgestaltungen der Erfindung sind der nachfolgenden Beschreibung und den Unteransprüchen zu entnehmen.

Die Erfindung wird nachstehend anhand eines in den beigefügten Abbildungen schematisch dargestellten Ausführungsbeispiels näher erläutert.
Fig. 1 zeigt schematisch eine Zugangsschutzeinrichtung.
Fig. 2 zeigt schematisch eine Zuhaltung für die Zugangsschutzeinrichtung.
Fig. 3 zeigt ein Diagramm bezüglich des Umschaltverhaltens bei einem Regelsprung.

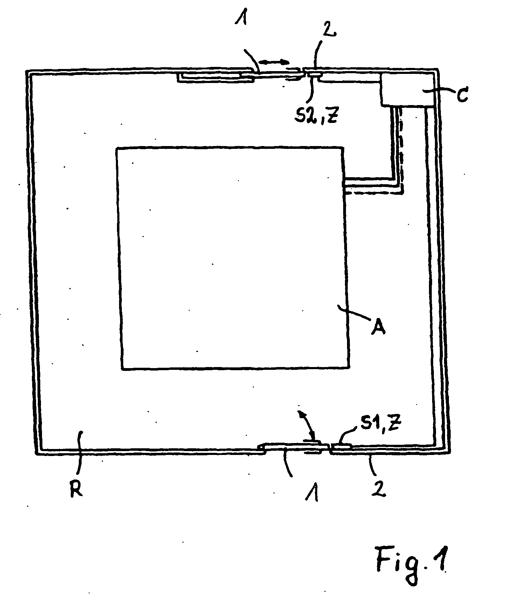

Fig. 1 zeigt eine Zugangsschutzeinrichtung für einen begehbaren, verschließbaren Raumbereich R einer maschinellen Anlage A (hierunter sind beispielsweise Maschinen oder Komponenten zum Herstellen, Behandeln oder Bearbeiten sowie daraus bestehende und gegebenenfalls auch chemische Anlagen od.dgl. zu verstehen). Der Raumbereich R ist über mehrere Türen 1 als bewegliche Teile gegenüber feststehenden Wänden 2 als feststehendem Teil zugänglich. Die gegebenenfalls umlaufend abgedichteten Türen 1 können durch Schwenken bzw. Schieben geöffnet bzw. geschlossen werden. Zwischen den Türen 1 und einer benachbarten Wand 2 befindet sich jeweils ein Sicherheitssensor S1, S2 und eine Zuhaltung Z für die Tür 1. Außerdem ist eine Steuerung C vorgesehen, die mit der maschinellen Anlage A und den Sicherheitssensoren S1, S2 gekoppelt ist, um die Zuhaltungen Z entsprechend dem Betriebszustand der maschinellen Anlage A zum Öffnen der Türen 1 freizugeben bzw. zu sperren. Wenn der Steuerung C ein Stillstehen der beweglichen Teile der maschinellen Anlage A etwa über Stillstandswächter (nicht dargestellt) signalisiert wird, gibt sie die Zuhaltungen Z frei, so daß der Raumbereich R durch Öffnen der Türen 1 begehbar wird. Stehen zumindest Teile der maschinellen Anlage A nicht still oder sind ansonsten vorzunehmende Vorkehrungen vor dem Öffnen der Türen 1 noch nicht getroffen, werden die Zuhaltungen blockiert, so daß die Türen 1 nicht geöffnet werden können. Außerdem verhindert die Steuerung C ein Inbetriebnehmen der maschinellen Anlage A bei wenigstens einer geöffneten Tür 1.

Die jeweilige Zuhaltung Z umfaßt einen Elektromagneten mit einer Spule 3 und einem im wesentlichen U-förmigen Kern 4, wobei der gebildete Magnetkreis durch ein an der Tür 1 befestigtes Joch 5 schließbar ist.

Der durch die Spule 3 fließende Strom und damit die Zuhaltekraft der Zuhaltung Z wird über eine Stromregelung 6 auf einem im wesentlichen konstanten ersten Sollwert gehalten. Über die Stromregelung 6 wird ein Transistor 7 angesteuert, über den ein entsprechend geregelter Strom durch die Spule 3 und über einen Shunt 8 nach Erde fließt. Parallel zur Spule 3 ist eine Diode 9 geschaltet, deren Funktion darin besteht, den Strom durch die Spule 3 aufrechtzuerhalten, wenn der Transistor 7 abschaltet.

Die Spannung am Shunt 8 ist ein Maß für den durch die Spule 3 fließenden Strom. Diese Spannung wird über einen A/D-Wandler 10 dargestellt.

Die Stromregelung 6 wird über ein beispielsweise von der Steuerung C erzeugtes Umschaltsignal periodisch, d.h. nach vorbestimmten Zeitintervallen, auf einen zweiten Sollwert umgeschaltet. Dieser zweite Sollwert ist vorzugsweise höher als der erste Sollwert, damit die Zuhaltekraft nicht durch das Umschalten erniedrigt wird. Das Umschaltsignal bewirkt das Anstoßen eines Zählers 11. Die Umschaltung zur Sollwerterhöhung (oder -erniedrigung) bewirkt infolge Induktivitätsänderung der Spule 3 gemäß einer e-Funktion eine zeitliche Verzögerung des Erreichens des zweiten Sollwerts, wobei der Zeitraum bis zum Erreichen des zweiten Sollwertes durch den durch die Spule 3 fließenden Strom davon abhängig ist, in welcher Entfernung sich das Joch 5 vom Kern 4 der Spule 3 befindet bzw. den Magnetkreis schließt. Bei Erreichen des zweiten Sollwertes wird der momentane Zählerstand des Zählers 11 ausgewertet, um zu bestimmen und damit zu überwachen, ob der Magnetkreis und damit die Zuhaltung Z mit der vorbestimmten Zuhaltekraft geschlossen oder aber geöffnet ist, d.h. die vorbestimmte Zuhaltekraft unterschritten wird.

Wenn der zweite Sollwert erreicht ist, kann mit oder ohne entsprechende Überprüfung der Zuhaltekraft auf den ersten Sollwert entsprechend periodisch zurückgeschaltet werden.

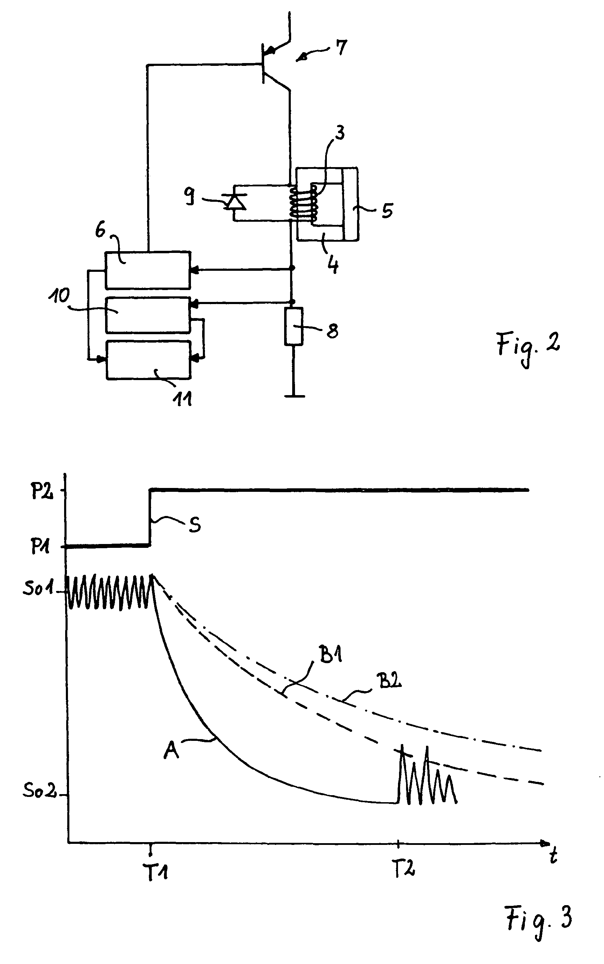

Wie in Fig. 3 dargestellt, bewirkt zunächst ein Pegel P1 eines Regelsignals für die Stromregelung 6, daß der Strom durch die Spule 3 auf den ersten Sollwert So1 geregelt wird. Zu einem Zeitpunkt T1 findet ein Sprung S auf einen Pegel P2 statt, durch das ein Regelsprung auf den zweiten Sollwert So2 bewirkt wird. Der Sprung S ist zugleich Triggersignal für den Zähler 11.

Die bewirkte Induktivitätsänderung der Spule 3 führt dazu, daß der Sollwert So2 erst nach einer zeitlichen Verzögerung erreicht wird. Wenn der Magnetkreis durch das Joch 5 geschlossen ist, ergibt sich - abhängig vom Elektromagneten und der Temperatur - ein relativ schnelles Erreichen des zweiten Sollwerts So2 entsprechend dem Kurvenstück A nach einem Zeitraum T2, der beispielsweise in der Größenordnung von etwa 1 ms liegen kann. Befindet sich ein Spalt zwischen Kern 4 und Joch 5, wird der Sollwert So2 erst später entsprechend dem Kurvenstück B1, B2 ... erreicht, wobei der Zeitraum vom Abstand des Jochs vom Kern 4 abhängig ist. Wenn sich beispielweise ein Blatt Papier einer Dicke von 100 µm zwischen beiden befindet, ergibt sich - ebenfalls abhängig vom Elektromagneten und der Temperatur - bereits eine erheblich größere Zeitdifferenz, die bei dem obigen Beispiel von 1 ms um etwa 2 ms im Vergleich zum geschlossenen Magnetkreis größer ist.

Die Periodizität bezüglich des Regelsprungs kann beispielsweise im Bereich von 10 bis 100 ms oder aber auch darunter und darüber liegen.

Die Stromregelung 6, der A/D-Wandler 10 und der Zähler 11 ebenso wie die Auswertung können durch einen Mikroprozessor dargestellt werden.

## Patentansprüche

1. Zugangsschutzeinrichtung für einen Raumbereich, die gesteuert ein- und abschaltbar ist, umfassend einen feststehenden Teil (2), wenigstens einen beweglichen Teil (1) zum Verschließen einer Zugangsöffnung des feststehenden Teils (2) sowie für jeden beweglichen Teil (1) eine Zuhaltung (Z) mit einem Elektromagneten, der mit einem am beweglichen Teil (1) befindlichen magnetisierbaren Joch (5) verschließbar ist, wobei der Elektromagnet zusammen mit dem Joch (5) einen durch das Joch (5) schließbaren Magnetkreis bildet, dessen Zuhaltekraft über eine Stromregelung (6) der Zugangsschutzeinrichtung regelbar ist, **dadurch gekennzeichnet, dass** für die Stromregelung (6) ein erster und ein zweiter Sollwert vorgegeben sind und periodisch ein Regelsprung vom ersten auf den zweiten Sollwert vorgenommen wird, wobei die Zeit vom Beginn des Regelsprungs bis zum Erreichen des zweiten Sollwerts gemessen und ausgewertet ist, um zu bestimmen, ob der Magnetkreis und damit die Zuhaltung eine vorbestimmte Zuhaltekraft unterschreitet.

2. Einrichtung nach Anspruch 1, **dadurch gekennzeichnet, dass** der durch den Elektromagneten fließende Strom über die Spannung an einem zugeordneten Shunt (8) messbar ist.

3. Einrichtung nach Anspruch 1 oder 2, **dadurch gekennzeichnet, dass** über den Regelsprung ein Zähler (11) triggerbar ist, dessen Zählstand bei Erreichen des zweiten Sollwerts auswertbar ist.

4. Einrichtung nach einem der Ansprüche 1 bis 3, **dadurch gekennzeichnet, dass** die Stromregelung (6), die Zeitmessung und Auswertung in einem Mikroprozessor implementiert sind.

5. Zuhaltung mit einem Elektromagneten umfassend eine Spule (3) mit Kern (4), der mit einem magnetisierbaren Joch (5) verschließbar ist, wobei der Elektromagnet zusammen mit dem Joch (5) einen durch das Joch (5) schließbaren Magnetkreis bildet, dessen Zuhaltekraft über eine Stromregelung (6) der Zuhaltung regelbar ist, **dadurch gekennzeichnet, dass** für die Stromregelung (6) ein erster und ein zweiter Sollwert vorgegeben sind und periodisch ein Regelsprung vom ersten auf den zweiten Sollwert vorgenommen wird, wobei die Zeit vom Beginn des Regelsprungs bis zum Erreichen des zweiten Sollwerts gemessen und ausgewertet ist, um zu bestimmen, ob der Magnetkreis und damit die Zuhaltung eine vorbestimmte Zuhaltekraft unterschreitet.

6. Zuhaltung nach Anspruch 5, **dadurch gekennzeichnet, dass** der durch den Elektromagneten fließende Strom über die Spannung an einem zugeordneten Shunt (8) messbar ist.

7. Zuhaltung nach Anspruch 5 oder 6, **dadurch gekennzeichnet, dass** über den Regelsprung ein Zähler (11) triggerbar ist, dessen Zählstand bei Erreichen des zweiten Sollwerts auswertbar ist.

8. Zuhaltung nach einem der Ansprüche 5 bis 7, **dadurch gekennzeichnet, dass** die Stromregelung (6), die Zeitmessung und Auswertung in einem Mikroprozessor implementiert sind.

## Claims

1. Access protection device for a spatial zone which can be switched on and off in a controlled way, comprising a fixed part (2), at least one movable part (1) for closing an access opening in the fixed part (2) and, for each movable part (1), a locking means (Z) having an electromagnet which is closable with a magnetisable yoke (5) located on the movable part (1), the electromagnet forming, together with the yoke (5), a magnetic circuit which is closable by the yoke (5), the locking force thereof being regulatable by means of a current regulator (6) of the access protection device, **characterized in that** for the current regulator (6) a first and a second desired value are preset and periodically a regulated jump from the first to the second desired value is carried out, the time from the beginning of the regulated jump to the time at which the second desired value is reached being measured and evaluated in order to determine whether the locking force of the magnetic circuit and thus of the locking means is below a predetermined value.

2. Device according to claim 1, **characterized in that** the current flowing through the electromagnet is measurable by means of the voltage across an associated shunt (8).

3. Device according to claim 1 or 2, **characterized in that** by means of the regulated jump a counter (11) is triggerable, the count of which is arranged to be evaluated when the second desired value is reached.

4. Device according to any one of claims 1 to 3, **characterized in that** the current regulator (6), the time measurement and evaluation are implemented in a microprocessor.

5. Locking means having an electromagnet comprising a coil (3) with a core (4), which is closable with a magnetisable yoke (5), the electromagnet forming, together with the yoke (5), a magnetic circuit which is closable by the yoke (5), the locking force thereof being regulatable by means of a current regulator (6) of the locking means, **characterized in that** for the current regulator (6) a first and a second desired value are preset and periodically a regulated jump from the first to the second desired value is carried out, the time from the beginning of the regulated jump to the time at which the second desired value is reached being measured and evaluated in order to determine whether the locking force of the magnetic circuit and thus of the locking means is below a predetermined value.

6. Locking means according to claim 5, **characterized in that** the current flowing through the electromagnet is measurable by means of the voltage across an associated shunt (8).

7. Locking means according to claim 5 or 6, **characterized in that** by means of the regulated jump a counter (11) is triggerable, the count of which is arranged to be evaluated when the second desired value is reached.

8. Locking means according to any one of claims 5 to 7, **characterized in that** the current regulator (6), the time measurement and evaluation are implemented in a microprocessor.

## Revendications

1. Dispositif de contrôle d'accès à un local, à activation et désactivation commandées, comprenant une partie fixe (2), au moins une partie mobile (1) pour la fermeture d'une ouverture d'accès que comporte ladite partie fixe (2) ainsi que pour chaque partie mobile (1) un moyen de maintien en position fermée (Z) avec un électro-aimant, lequel peut être refermé avec une culasse (5) magnétisable disposée sur ladite partie mobile (1), où l'électro-aimant forme avec la culasse (5) un circuit magnétique fermable par la culasse (5), circuit dont la force de maintien est réglable par une régulation de courant (6) dudit dispositif de contrôle d'accès à un local, **caractérisé en ce qu'**une première valeur théorique et une deuxième valeur théorique de la régulation de courant (6) sont pré-définies, et que périodiquement un saut de régulation est effectué de la première valeur théorique à la deuxième valeur théorique, lors duquel saut le temps depuis le début du saut jusqu'à l'atteinte est mesuré et dépouillé, pour évaluer si le circuit magnétique et de ce fait le moyen de maintien en position fermée dépasse vers le bas une force de maintien pré-déterminée.

2. Dispositif selon la revendication 1, **caractérisé en ce que** le courant circulant à travers l'électro-aimant est mesurable sur la tension d'un shunt (8) adjacent.

3. Dispositif selon la revendication 1 ou 2, **caractérisé en ce qu'**un compteur (11) est déclenché lors du saut de régulation, et que la position de ce compteur est dépouillable lors de l'atteinte de la deuxième valeur théorique.

4. Dispositif selon l'une des revendications 1 à 3, **caractérisé en ce que** la régulation de courant (6), la mesure du temps et le dépouillement des valeurs sont implantés sur un microprocesseur.

5. Moyen de maintien en position fermée avec un électro-aimant comportant une bobine (3) avec un noyau (4), qui est refermable avec une culasse (5) magnétisable, où l'électro-aimant forme avec la culasse (5) un circuit magnétique fermable par la culasse (5), circuit dont la force de maintien est réglable par une régulation de courant (6) dudit moyen de maintien en position fermée, **caractérisé en ce que** qu'une première valeur théorique et une deuxième valeur théorique de la régulation de courant (6) sont pré-définies, et que périodiquement un saut de régulation est effectué de la première valeur théorique à la deuxième valeur théorique, lors duquel saut le temps depuis le début du saut jusqu'à l'atteinte est mesuré et dépouillé, pour évaluer si le circuit magnétique et de ce fait le moyen de maintien en position fermée dépasse vers le bas une force de maintien pré-déterminée.

6. Moyen de maintien en position fermée selon la revendication 5, **caractérisé en ce que** le courant circulant à travers l'électro-aimant est mesurable sur la tension d'un shunt (8) adjacent.

7. Moyen de maintien en position fermée selon la revendication 5 ou 6, **caractérisé en ce qu'**un compteur (11) est déclenché lors du saut de régulation, et que la position de ce compteur est dépouillable lors de l'atteinte de la deuxième valeur théorique.

8. Moyen de maintien en position fermée selon l'une des revendications 5 à 7, **caractérisé en ce que** la régulation de courant (6), la mesure du temps et le dépouillement des valeurs sont implantés sur un microprocesseur.
